# EUROPEAN PATENT APPLICATION

(11) **EP 4 787 186 A1**
(43) Date of publication of application: **05.08.2026**
(21) Application number: 23954400.0
(22) Date of filing: 29.09.2023
(51) Int. Cl.: G06F 16/90

(54) **INFORMATION PROCESSING DEVICE, INFORMATION PROCESSING METHOD, AND INFORMATION PROCESSING PROGRAM**

(71) Applicant: Pioneer Corporation, Tokyo 113-0021 (JP)
(72) Inventor: KOYANAGI, Shogo, Tokyo 170-0013 (JP)
(74) Representative: Hoffmann Eitle
(86) International application number: PCT/JP2023/035786
(87) International publication number: WO 2025/069434

(57) **Abstract**

An information processing device according to the present invention presents information regarding a recommendation target to a user on the basis of a dialog with the user, the information processing device including a first transmission unit, a second transmission unit, and a presentation control unit. The first transmission unit transmits, to a first external device, question request information for requesting the first external device to present a question for narrowing down the recommendation target, an answer from the user to the question output from the first external device in accordance with the question request information, and attribute specifying information for specifying an attribute of a keyword to be specified by the first external device on the basis of the answer. The second transmission unit transmits the keyword specified by the first external device in accordance with the attribute specifying information to a second external device, the second external device being different from the first external device. The presentation control unit presents, to the user, as information regarding the recommendation target, information based on a search result obtained by the second external device performing a search by using the keyword as a search condition.

## Description

### Field

The present invention relates to an information processing device, an information processing method, and an information processing program.

### Background

Some recent artificial intelligence chatbots have advanced sentence interpretation ability and sentence generation ability through pre-learning a large amount of text data on the Internet and can search information on the web in response to a question or a request from a user and summarize search results to provide an answer. According to such an artificial intelligence chatbot, it is also possible to listen to a user's request and to make a proposal corresponding to related information or services. Therefore, for example, it is possible to create an application that implements a recommendation function by cooperating with an artificial intelligence chatbot via an application programming interface (API).

Meanwhile, Patent Literature 1 discloses a technology of presenting recommendation information depending on a user by repeating a question and an answer with the user by voice dialog (conversational input) using a chatbot.

### Citation List

### Patent Literature

Patent Literature 1: JP 2018-92585 A

### Summary

### Technical Problem

However, in the above-described prior art, it is not always possible to present accurate recommendation information.

For example, the chatbot can generate an appropriate answer to the input from the user by using natural language processing technique; however, due to the need for training in advance, there are cases where the most recent situation is not reflected in the answer, resulting in presenting inaccurate information that is not based on the latest information.

Therefore, there is a demand for a method capable of presenting accurate recommendation information even in a case where such a chatbot that cannot support the latest information is partially used in a recommendation function.

The present invention has been made in view of the above, and the object of the present invention is to provide an information processing device, an information processing method, and an information processing program capable of providing more accurate recommendation information.

### Solution to Problem

An information processing device that presents information regarding a recommendation target to a user on a basis of a dialog with the user, the information processing device comprising: a first transmission unit that transmits, to a first external device, question request information for requesting the first external device to present a question for narrowing down the recommendation target, an answer from the user to the question output from the first external device in accordance with the question request information, and attribute specifying information for specifying an attribute of a keyword to be specified by the first external device on the basis of the answer; a second transmission unit that transmits the keyword specified by the first external device in accordance with the attribute specifying information to a second external device, the second external device being different from the first external device; and a presentation control unit that presents, to the user, as information regarding the recommendation target, information based on a search result obtained by the second external device performing a search by using the keyword as a search condition.

An information processing method executed by an information processing device that presents information regarding a recommendation target to a user on a basis of a dialog with the user, the information processing method comprising: a first transmission step of transmitting, to a first external device, question request information for requesting the first external device to present a question for narrowing down the recommendation target, an answer from the user to the question output from the first external device in accordance with the question request information, and attribute specifying information for specifying an attribute of a keyword to be specified by the first external device on the basis of the answer; a second transmission step of transmitting the keyword specified by the first external device in accordance with the attribute specifying information to a second external device, the second external device being different from the first external device; and a presentation control step of presenting, to the user, as information regarding the recommendation target, information based on a search result obtained by the second external device performing a search by using the keyword as a search condition.

n information processing program executed by an information processing device that presents information regarding a recommendation target to a user on a basis of a dialog with the user, the information processing program comprising: a first transmission procedure of transmitting, to a first external device, question request information for requesting the first external device to present a question for narrowing down the recommendation target, an answer from the user to the question output from the first external device in accordance with the question request information, and attribute specifying information for specifying an attribute of a keyword to be specified by the first external device on the basis of the answer; a second transmission procedure of transmitting the keyword specified by the first external device in accordance with the attribute specifying information to a second external device, the second external device being different from the first external device; and a presentation control procedure of presenting, to the user, as information regarding the recommendation target, information based on a search result obtained by the second external device performing a search by using the keyword as a search condition.

### Brief Description of Drawings

FIG. 1 is a diagram illustrating an example of a system according to an embodiment.
FIG. 2 is a diagram illustrating an example of dialog control according to the embodiment.
FIG. 3 is a diagram illustrating a configuration example of a terminal device according to the embodiment.
FIG. 4 is a diagram (1) illustrating an information processing procedure according to the embodiment.
FIG. 5 is a diagram (2) illustrating an information processing procedure according to the embodiment.
FIG. 6 is a hardware configuration diagram illustrating an example of a computer that implements functions of the terminal device according to the embodiment.

### Description of Embodiments

### [Embodiments]

Hereinafter, embodiments of the present invention will be described in detail with reference to the accompanying drawings. Note that, in the present specification and the drawings, components having substantially the same functional configuration are denoted by the same reference numerals, and redundant description is omitted.

One or a plurality of embodiments (including examples, modifications, and application examples) described below can each be implemented independently. On the other hand, the plurality of embodiments described below may be at least partially combined with at least some of the other embodiments as appropriate. The plurality of embodiments may include novel features different from each other. Therefore, the plurality of embodiments can contribute to solving objects or problems different from each other and can exhibit different effects.

### [1. System Configuration]

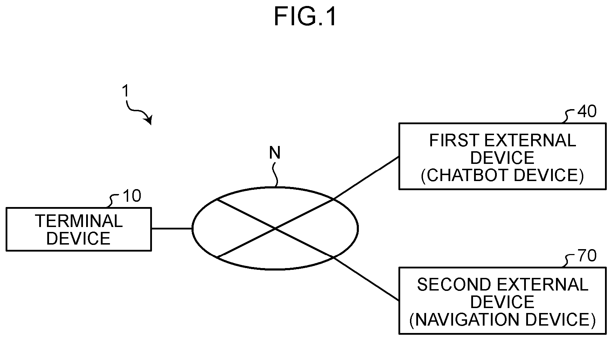

First, the configuration of a system according to an embodiment will be described with reference to FIG. 1. FIG. 1 is a diagram illustrating an example of the system according to the embodiment. A system 1 is illustrated in FIG. 1 as an example of the system according to the embodiment. Information processing according to the proposed technology of the present invention (hereinafter, abbreviated as "information processing of the embodiment") is implemented in the system 1.

As illustrated in FIG. 1, the system 1 includes a terminal device 10, a first external device 40, and a second external device 70. In addition, the terminal device 10, the first external device 40, and the second external device 70 are communicably connected in a wired or wireless manner via a network N. The system 1 may also include any number of terminal devices 10, any number of first external devices 40, and any number of second external devices 70.

The terminal device 10 may be an information processing terminal used by a user U who intends to receive provision of various pieces of recommendation information in a dialog via recommendation service implemented by the system 1. That is, the terminal device 10 is an information processing device that presents information regarding a recommendation target to the user U on the basis of a dialog with the user U.

Examples of the terminal device 10 include a smartphone, a wearable device, a tablet terminal, a notebook personal computer (PC), a desktop PC, a mobile phone, a personal digital assistant (PDA), and the like.

As another example, the terminal device 10 may be implemented as a navigation device built in or loaded on a vehicle, namely, an in-vehicle device. The terminal device 10 as an in-vehicle device may have not only a navigation function but also a recording function (drive recorder function).

The first external device 40 may be any server device as long as the device can implement a dialog with the user U. In the present embodiment, it is based on the premise that the first external device 40 is a chatbot device that operates as a general-purpose chatbot. The first external device 40 may be equipped with so-called generative AI (artificial intelligence capable of creating various types of content or ideas such as a conversation, a story, an image, a moving image, or music). In addition, a machine learning model is used in the generative AI, and for example, learning is repeatedly performed so as to implement a highly accurate dialog with the user U.

As described above, since training is necessary, the first external device 40 may not reflect the latest situation in the answer and, as a result, may output inaccurate recommendation information which is not based on the latest information. For example, in a case where the first external device is having a dialog with the user U on a topic related to recommended visiting spots, there is a case where the first external device 40 recommends a spot that existed in the past but does not currently exist (for example, a store). Therefore, the information processing according to the embodiment uses a keyword obtained by a recommendation function of the first external device 40 to cause another external device updated in such a manner as to support the latest information, namely, the second external device 70 to execute a search based on the keyword, thereby acquiring the final recommendation information (accurate recommendation information).

The information processing according to the embodiment is mainly performed by the terminal device 10. According to such a terminal device 10, various commands are transmitted to the chatbot device so that the general-purpose chatbot device (first external device 40) can be used more appropriately, and as a result, the chatbot device is customized. The terminal device 10 operates in accordance with an information processing program according to the embodiment.

Returning to the description of FIG. 1, the second external device 70 is a server device that is updated in such a manner as to be able to support the latest information. In the present embodiment, it is based on the premise that the second external device 70 is a cloud navigation device having a route guidance function, a recommendation function for surrounding spots, and the like.

### [2. Example of Dialog Control]

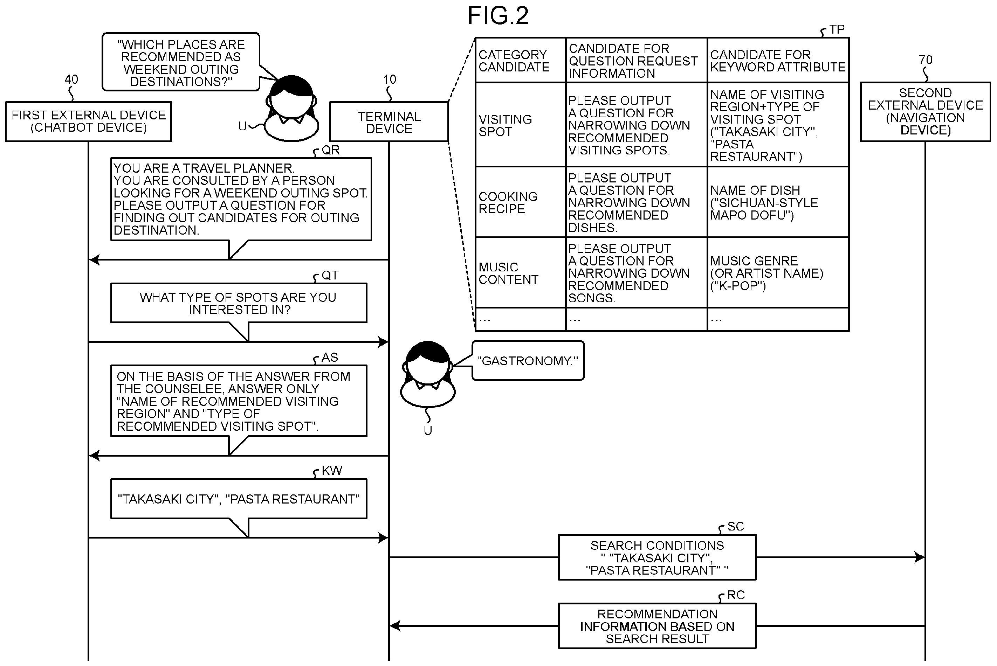

An example of dialog control implemented in the system 1 will be described. FIG. 2 is a diagram illustrating an example of dialog control according to the embodiment. FIG. 2 illustrates a scene where a dialog (voice dialog) with the user U by speech is performed. In the voice dialog, the user U inputs utterance voice of an answer to a microphone of the terminal device 10 in response to output voice, for example. Note that the output voice referred to here is a question voice or the like corresponding to a question text generated by the first external device 40 operating as a chatbot and is output from a speaker of the terminal device 10.

First, the terminal device 10 may accept specification of a category to which a recommendation target belongs (hereinafter, abbreviated as "category of the recommendation target") from the user U. There may be a plurality of categories for a recommendation target, and examples thereof include "visiting Spot", "Cooking Recipe", and "Music Content". In such an example, the terminal device 10 may allow the user U to select one from among options by displaying categories for the recommendation target such as "Visiting Spot", "Cooking Recipe", and "Music Content" on a display screen. For example, the terminal device 10 may accept specification of the category of the recommendation target by a screen touch operation or may accept specification of the category of the recommendation target by voice input.

FIG. 2 illustrates an example in which the user U inputs utterance voice of "Which places are recommended as weekend outing destinations?" into the microphone of the terminal device 10. The terminal device 10 recognizes that the user U requests a recommendation of some "Visiting Spot" such as one certain store from the utterance voice and, as a result, accepts specification of "Visiting Spot" as the category of the recommendation target.

In this example, the terminal device 10 holds, in a storage unit, template information TP in which "Candidate for Category", "Candidate for Question Request Information", and "Candidate for Keyword Attribute" are associated with each other. Therefore, the terminal device 10 compares the category of the recommendation target of "Visiting Spot" with the template information TP and generates question request information for requesting the first external device 40 to output a question for narrowing down the recommended visiting spot and attribute specifying information for specifying an attribute of a keyword used for the search for the recommended visiting spot, namely, a keyword attribute.

According to the template information TP, a candidate for question request information "Please output a question for narrowing down recommended visiting spots." is associated with the category candidate "Visiting Spot". In FIG. 2, it is based on a premise that the terminal device 10 has generated question request information QR of "You are a travel planner. You are consulted by a person looking for a weekend outing spot. Please output a question to find out candidates for an outing destination." in accordance with such an example.

Furthermore, according to the template information TP, the candidate for the keyword attribute of "Name of Visiting Region + Type of Visiting Spot" is associated with the category candidate "Visiting Spot". FIG. 2 illustrates an example in which the terminal device 10 generates attribute specifying information AS of "On the basis of the answer from the counselee, answer only 'Name of Recommended Visiting Region' and 'Type of Recommended Visiting Spot.'" in accordance with such an example.

Note that, as will be described later, the keyword used to search for the recommended visiting spot is specified by the first external device 40. For example, the first external device 40 specifies the keyword on the basis of the answer from the user U to the question generated in accordance with the question request information QR and the keyword attribute specified by the attribute specifying information AS.

After generating the question request information QR and the attribute specifying information AS, the terminal device 10 first transmits the question request information QR to the first external device 40 as illustrated in FIG. 2.

Let us presume that the first external device 40 has generated a question text QT of "What type of spots are you interested in?" in response to the question request information QR and output the question text QT to the terminal device 10.

The terminal device 10 causes the speaker to output the question voice synthesized from the question text QT. FIG. 2 illustrates an example in which the user U inputs utterance voice of answering "Gastronomy." to the microphone in response to the question voice. In a case where the answer from the user U is obtained as described above, the terminal device 10 transmits the attribute specifying information AS to the first external device 40 as illustrated in FIG. 2. The terminal device 10 may transmit the attribute specifying information AS to the first external device 40 together with the information indicating the answer from the user U.

Then, the first external device 40 specifies a keyword KW used for searching for the recommended visiting spot on the basis of the answer from the user U of "Gastronomy." and the keyword attribute indicated by the attribute specifying information AS of "Name of Recommended Visiting Region + Type of Recommended Visiting Spot." Specifically, the first external device 40 specifies, as the keyword KW, a keyword indicating the name of the recommended visiting region and a keyword indicating the type of the recommended visiting spot. FIG. 2 illustrates an example in which the first external device 40 specifies a keyword "Takasaki City" indicating the name of the recommended visiting region, specifies a keyword "pasta restaurant" indicating the type of the recommended visiting spot, and transmits the specified keywords KW to the terminal device 10.

In this manner, the terminal device 10 appropriately customizes the function of the first external device 40 using the attribute specifying information. Specifically, the terminal device 10 does not cause the first external device 40 that may output inaccurate recommendation information not based on the latest information to present a detailed recommended visiting spot. Instead, the terminal device 10 requests the first external device 40 to output not information of a fine granularity such as a detailed recommended visiting spot but information of a coarse granularity that gives a hint for the second external device 70 to obtain a detailed recommended visiting spot. In other words, the terminal device 10 specifies the keyword attribute in the attribute specifying information AS such that the first external device 40 outputs, as the keyword KW to be used for searching for the recommended visiting spot, not a unique name such as a store name having a relatively high possibility of changing with the lapse of time and date but the name of a region or the type of a spot having a relatively low possibility of changing with the lapse of time and date. For example, even in the first external device 40 that cannot fully support the latest information, it is conceivable that accuracy of a certain level or higher can be maintained as long as the granularity of information is coarse, and thus such control is performed.

On the other hand, the terminal device 10 requests the second external device 70 supporting the latest information to present detailed information about the recommended visiting spot information by using the keywords KW acquired from the first external device 40. As illustrated in FIG. 2, the terminal device 10 transmits the keywords KW as search conditions SC to the second external device 70.

The second external device 70 searches for a recommended visiting spot that satisfies the search conditions SC. In this example, the second external device 70 searches for detailed information that makes it possible to uniquely identify the recommended visiting spot (for example, the unique name or the location of the recommended visiting spot) such as "Pasta Specialty Restaurant NA in Takasaki City". In addition, the second external device 70 searches for a route via the recommended visiting spot. For example, the second external device 70 may search for a route via the recommended visiting spot in accordance with preset content of the user U. For example, the second external device 70 may search for a route from the point of departure or the current location of the user U to the recommended visiting spot or may search for a route from the point of departure or the current location of the user U to a destination of the user U, which is a route via the recommended visiting spot.

Then, the second external device 70 transmits information regarding the recommended visiting spot including the route search result to the terminal device 10 as recommendation information RC regarding the recommended visiting spot.

Then, the terminal device 10 presents the recommendation information RC to the user U. For example, the terminal device 10 may synthesize voice reading out the recommendation information RC and cause a speaker to output the synthesized voice. Meanwhile, the terminal device 10 may display the recommendation information RC on the display screen.

The example of FIG. 2 illustrates an example in which the terminal device 10 synthesizes question voice in the form of voice from the question and causes the speaker to output the synthesized question voice. However, the terminal device 10 may generate a question image in the form of an image from the question and display the generated question image on the display screen. Furthermore, the input by the user U may be performed by voice or screen selection. In addition, the number of questions for narrowing down the recommendation target may be plural, and the terminal device 10 may include information specifying the number of questions in the question request information QR and transmit the information to the first external device 40. That is, the question request information of the template information TP held by the terminal device 10 may include the number of questions to be output by the first external device 40 in advance.

### [3. Functional Configuration]

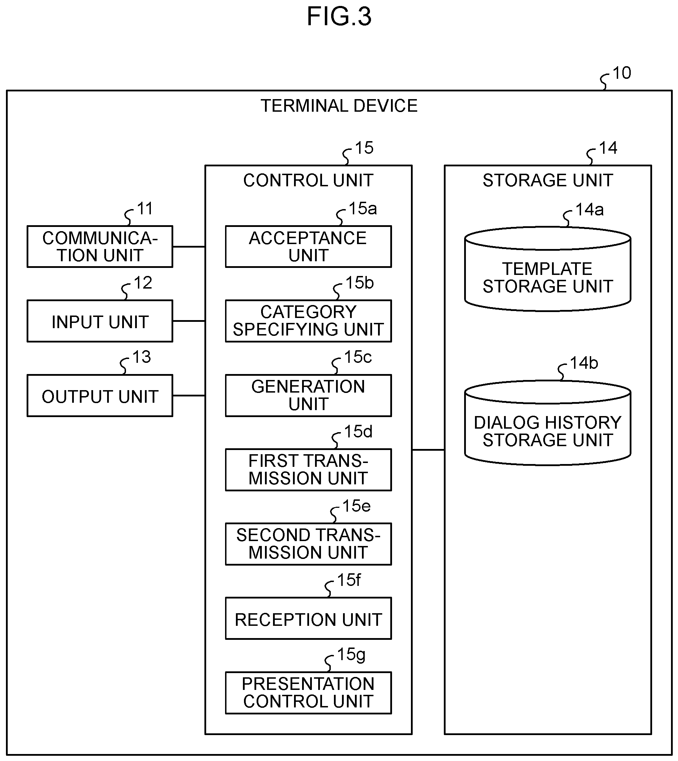

A configuration example of the terminal device 10 will be described with reference to FIG. 3. FIG. 3 is a diagram illustrating a configuration example of the terminal device 10 according to the embodiment. As illustrated in FIG. 3, the terminal device 10 includes a communication unit 11, an input unit 12, an output unit 13, a storage unit 14, and a control unit 15.

### (Communication Unit 11)

The communication unit 11 is implemented by, for example, a network interface card (NIC) or the like. The communication unit 11 is connected to the network N in a wired or wireless manner and transmits and receives information to and from the first external device 40 and the second external device 70, for example.

### (Input Unit 12)

The input unit 12 is an input device that accepts various types of input from the outside. For example, the input unit 12 is an operation device for the user U to perform various operations, such as a keyboard, a mouse, or operation keys. Note that, in a case where a touch panel is adopted in the terminal device 10, the touch panel is also included in the input unit 12. In this case, the user U performs various operations by touching the touch panel. The input unit 12 also includes a microphone that accepts voice input by utterance.

### (Output Unit 13)

The output unit 13 is a device that performs various types of output such as sound, light, vibration, or an image to the outside. The output unit 13 performs various types of output to the user U under the control of the control unit 15. Note that the output unit 13 includes a display device that displays various types of information. The display device is, for example, a liquid crystal display or an organic electro luminescence (EL) display. Note that the output unit 13 may be a touch panel type display device. In this case, the input unit 12 and the output unit 13 may be regarded as an integrated component. The output unit 13 may also be a speaker.

### (Storage Unit 14)

The storage unit 14 is implemented by, for example, a semiconductor memory element such as a random access memory (RAM) or a flash memory, or a storage device such as a hard disk or an optical disk. The storage unit 14 may store, for example, data and programs regarding the information processing of the embodiment. Furthermore, according to the example of FIG. 3, the storage unit 14 may include a template storage unit 14a and a dialog history storage unit 14b.

The template storage unit 14a stores the template information TP. The dialog history storage unit 14b stores history information of a dialog with the user U.

### (About Control Unit 15)

The control unit 15 is implemented with a central processing unit (CPU), a micro processing unit (MPU), or the like executing various programs (for example, an information processing program according to the embodiment) stored in a storage device inside the terminal device 10 using the RAM as a work area. Note that the control unit 15 is implemented by an integrated circuit such as an application specific integrated circuit (ASIC) or a field programmable gate array (FPGA).

As illustrated in FIG. 3, the control unit 15 includes an acceptance unit 15a, a category specifying unit 15b, a generation unit 15c, a first transmission unit 15d, a second transmission unit 15e, a reception unit 15f, and a presentation control unit 15g and implements or executes a function or an action of the information processing described below. Note that the internal configuration of the control unit 15 is not limited to the configuration illustrated in FIG. 3 and may be another configuration as long as the information processing described below is performed. Furthermore, the connection relationship of the processing units included in the control unit 15 is not limited to the connection relationship illustrated in FIG. 3 and may be another connection relationship.

### (Acceptance Unit 15a)

The acceptance unit 15a accepts information input via the input unit 12. For example, the acceptance unit 15a accepts voice input by utterance via the microphone or touch input via the touch panel. For example, the acceptance unit 15a accepts information indicating an answer by the user U to a question.

### (Category Specifying Unit 15b)

The category specifying unit 15b accepts the specification of a category to which a recommendation target that the user U desires to be proposed belongs from among a plurality of categories. For example, the category specifying unit 15b may display categories for the recommendation target such as "Visiting Spot", "Cooking Recipe", and "Music Content" on the display screen and accept specification of a desired category by allowing the user U to select one from among the options.

### (Generation Unit 15c)

The generation unit 15c generates control information for controlling the first external device 40. For example, the generation unit 15c generates question request information for requesting the first external device 40 to output a question for narrowing down the recommendation target belonging to the category specified by the user U. As described with reference to FIG. 2, the generation unit 15c can generate the question request information by comparing the category specified by the user U with the template information TP.

In addition, the generation unit 15c generates attribute specifying information for specifying a keyword attribute that is an attribute of a keyword to be specified on the basis of an answer from the user U to the question. As described with reference to FIG. 2, the generation unit 15c can generate the attribute specifying information by comparing the category specified by the user U with the template information TP.

In addition, the generation unit 15c may generate information for specifying to output each of keywords specified by the first external device 40 in accordance with the attribute specifying information in a manner in which each of the keywords is distinguished from one another and include the generated information in the attribute specifying information.

### (First Transmission Unit 15d)

The first transmission unit 15d transmits the question request information and the attribute specifying information to the first external device 40. For example, the first transmission unit 15d may transmit the question request information in a case where the category specifying unit 15b accepts specification of a category and may transmit the attribute specifying information in a case where an answer from the user U to the question generated by the first external device 40 in accordance with the question request information is obtained.

In addition, the first transmission unit 15d may also transmit the answer from the user U to the question generated by the first external device 40 in accordance with the question request information to the first external device 40.

### (Second Transmission Unit 15e)

The second transmission unit 15e transmits the keyword specified by the first external device 40 in accordance with the attribute specifying information to the second external device 70 different from the first external device 40. For example, the second transmission unit 15e transmits the keyword specified by the first external device 40 in accordance with the attribute specifying information as the search conditions to the second external device 70.

### (Reception Unit 15f)

The reception unit 15f receives the question generated by the first external device 40 according to the question request information from the first external device 40. Furthermore, the reception unit 15f receives the keyword specified by the first external device 40 in accordance with the attribute specifying information from the first external device 40.

Furthermore, the reception unit 15f receives information regarding the recommendation from the second external device 70.

### (Presentation Control Unit 15g)

The presentation control unit 15g presents, to the user U, as information regarding the recommendation target, information based on a search result obtained by the second external device 70 performing a search by using the keyword as a search condition. For example, the presentation control unit 15g may synthesize a voice reading out the recommendation information and cause the speaker to output the synthesized voice. Meanwhile, the presentation control unit 15g may display the recommendation information on the display screen.

### [4. Information Processing Procedure]

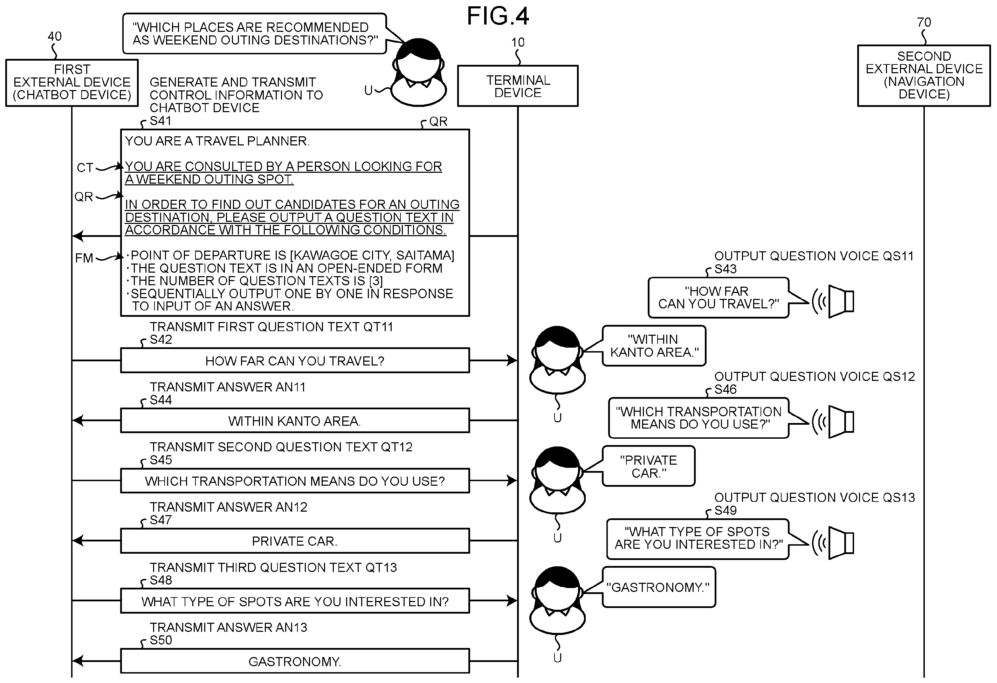

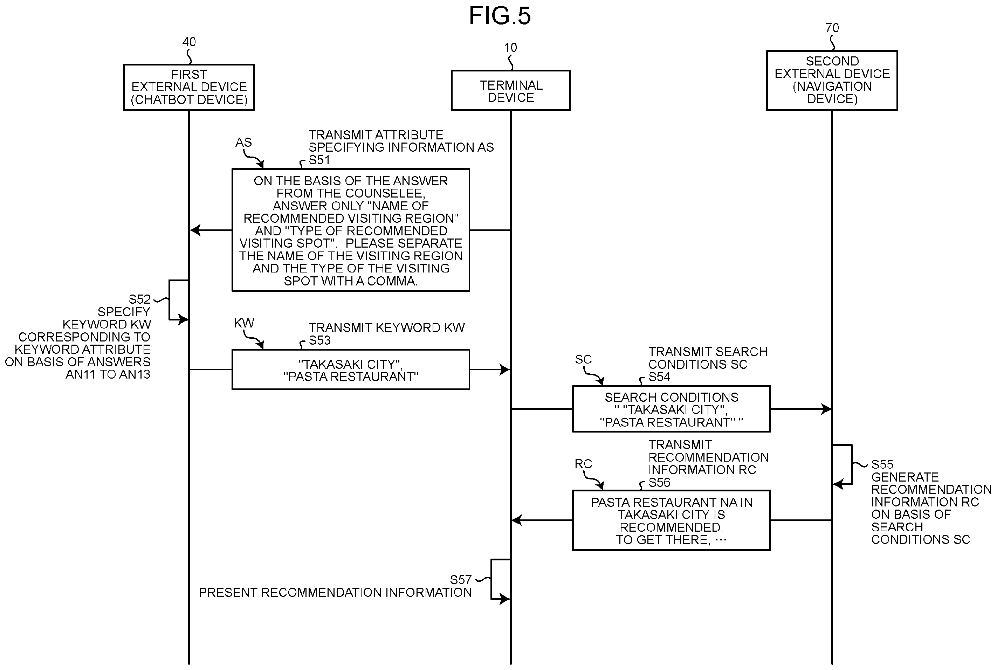

An information processing procedure implemented by the system 1 will be described with reference to FIGS. 4 and 5. The scenes illustrated in FIGS. 4 and 5 as an example correspond to a detailed example of the content described in FIG. 2.

FIG. 4 is a diagram (1) illustrating the information processing procedure according to the embodiment. FIG. 4 illustrates an example in which the user U inputs utterance voice of "Which places are recommended as weekend outing destinations?" into the microphone of the terminal device 10. In such an example, the category specifying unit 15b recognizes that the user U desires a recommendation of "Visiting Spot" and, as a result, accepts specification of "Visiting Spot" as the category of the recommendation target. In this manner, the information processing of the embodiment may proceed with the reception of the category of the recommendation target as a starting point.

For example, the generation unit 15c of the terminal device 10 generates control information for controlling the first external device 40 on the basis of the template information TP and transmits the generated control information to the first external device 40 (step S41).

For example, the generation unit 15c generates category specifying information CT on the basis of the category of the recommendation target of "Visiting Spot". FIG. 4 illustrates an example in which the generation unit 15c generates category specifying information CT of "You are a travel planner. You are consulted by a person looking for a weekend outing spot." Note that the category specifying information CT can also be referred to as a part of prompt information for requesting information from the first external device 40.

In addition, the generation unit 15c generates the question request information QR by comparing the category of the recommendation target of "Visiting Spot" with the template information TP. FIG. 4 illustrates an example in which the generation unit 15c generates question request information QR of "In order to find out candidates for an outing destination, please output a question text in accordance with the following conditions."

In addition, the generation unit 15c generates the attribute specifying information AS by comparing the category of the recommendation target of "Visiting Spot" with the template information TP. FIG. 5 illustrates an example in which the generation unit 15c generates the attribute specifying information AS of "On the basis of the answer from the counselee, answer only 'Name of Recommended Visiting Region' and 'Type of Recommended Visiting Spot'. Please separate the name of the visiting region and the type of the visiting spot with a comma." Note that the reason for separating "Name of Recommended Visiting Region" and "Type of Recommended Visiting Spot" with a comma is to enable the terminal device 10 to distinguish between the keyword indicating the name of the recommended visiting region and the keyword indicating the type of the recommended visiting spot.

In addition, the generation unit 15c may further generate the format specifying information FM defining, in accordance with the content of the question request information QR, the point of departure [Kawagoe City, Saitama pref.], that the question text is in an open-ended form, that the number of question texts is [3], that the question texts are sequentially output one by one in response to an answer, and others as the output format (output condition) of the question texts. Note that the generation unit 15c may determine the point of departure depending on the current position of the terminal device 10 or preset content of the user U or may determine the number N of question texts ("three" in the above example) according to the preset content of the user U.

Then, the first transmission unit 15d transmits the control information including the category specifying information CT, the question request information QR, and the format specifying information FM to the first external device 40. At this point, the first transmission unit 15d may simultaneously transmit the attribute specifying information AS to the first external device 40 or may transmit the attribute specifying information AS later. In the present embodiment, the attribute specifying information AS will be transmitted later.

The first external device 40 generates a first question text QT11 according to the control information and transmits the generated question text QT11 to the terminal device 10 (step S42). FIG. 4 illustrates an example in which the first external device 40 transmits the question text QT11 of "How far can you travel?" to the terminal device 10.

When the first question text QT11 is received by the reception unit 15f, the presentation control unit 15g of the terminal device 10 synthesizes question voice QS11 in a voice format from the question text QT11 and causes the speaker to output the question voice QS11 (step S43).

Let us presume that the user U inputs an answer AN11 of "Within Kanto area." to the question voice QS11 into the microphone. In such a case, the first transmission unit 15d transmits information indicating the answer AN11 to the first external device 40 in response to the acceptance of the answer AN11 by the acceptance unit 15a (step S44).

The first external device 40 subsequently generates a second question text QT12 according to the control information and transmits the generated question text QT12 to the terminal device 10 (step S45). FIG. 4 illustrates an example in which the first external device 40 transmits the question text QT12 asking "Which transportation means do you use?" to the terminal device 10.

When the second question text QT12 is received by the reception unit 15f, the presentation control unit 15g synthesizes question voice QS12 in a voice format from the question text QT12 and causes the speaker to output the question voice QS12 (step S46).

Let us presume that the user U inputs an answer AN12 of "A private car." to the question voice QS12 into the microphone. In such a case, the first transmission unit 15d transmits information indicating the answer AN12 to the first external device 40 in response to the acceptance of the answer AN12 by the acceptance unit 15a (step S47).

The first external device 40 subsequently generates a third question text QT13 according to the control information and transmits the generated question text QT13 to the terminal device 10 (step S48). FIG. 4 illustrates an example in which the first external device 40 transmits the question text QT13 asking "What type of spots are you interested in?" to the terminal device 10.

When the third question text QT13 is received by the reception unit 15f, the presentation control unit 15g synthesizes question voice QS13 in a voice format from the question text QT13 and causes the speaker to output the question voice QS13 (step S49).

Let us presume that the user U inputs an answer AN13 of "Gastronomy." for the question voice QS13 into the microphone. In such a case, the first transmission unit 15d transmits information indicating the answer AN13 to the first external device 40 in response to the acceptance of the answer AN13 by the acceptance unit 15a (step S50).

In this example, in step S50, the question voices corresponding to the three question texts (N = 3), which is the prescribed number of question texts, have been sequentially presented one by one in response to an answer by the user U, and the answers to the question voices have been acquired. Therefore, the first transmission unit 15d transmits, to the first external device 40, request information for requesting to output the keyword KW based on the answers from the user U obtained so far.

The process proceeds to FIG. 5. FIG. 5 is a diagram (2) illustrating the information processing procedure according to the embodiment. According to the example of FIG. 5, the first transmission unit 15d transmits the attribute specifying information AS generated in step S41 to the first external device 40 as the request information for requesting to output the keyword KW (step S51). Note that the attribute specifying information AS may be generated by the generation unit 15c at a point in time when all the answers from the user U to the respective question texts are obtained.

The first external device 40 specifies the keyword KW used for searching for the recommended visiting spot on the basis of the answers AN11 to AN13 and the keyword attribute indicated by the attribute specifying information AS of "Name of Recommended Visiting Region + Type of Recommended Visiting Spot" (step S52). Specifically, the first external device 40 specifies, as the keyword KW, a keyword indicating the name of the recommended visiting region and a keyword indicating the type of the recommended visiting spot. FIG. 5 illustrates an example in which the first external device 40 specifies a keyword "Takasaki City" indicating the name of the recommended visiting region and a keyword "pasta restaurant" indicating the type of the recommended visiting spot.

Furthermore, the first external device 40 transmits the keyword KW to the terminal device 10 (step S53).

When the keyword KW is received by the reception unit 15f, the second transmission unit 15e of the terminal device 10 transmits the keyword KW as the search condition SC to the second external device 70 (step S54).

The second external device 70 generates information regarding the recommended visiting spot as the recommendation information RC regarding the recommendation target on the basis of the search condition SC (step S55). For example, the second external device 70 searches for a recommended visiting spot that satisfies the search conditions SC. For example, the second external device 70 searches for unique information that makes it possible to uniquely identify the recommended visiting spot (for example, the unique name or the location of the recommended visiting spot) such as "Pasta Specialty Restaurant NA in Takasaki City".

In addition to the search condition SC corresponding to the keyword KW, in a case where another search condition is input by the user U, the second external device 70 searches for a recommended visiting spot that further satisfies the other search condition input by the user U. For example, the user U may input a scheduled visit date and the number of visitors as search conditions. For example, the acceptance unit 15a of the terminal device 10 may accept the input of the search condition from the user U, and the second transmission unit 15e may transmit the search condition of the user U to the second external device 70.

Note that, in a case where a plurality of recommended visiting spots satisfying the search condition are obtained, the second external device 70 may determine all of the plurality of recommended visiting spots as presentation targets to the user U or may determine a predetermined number (for example, a number determined by the user U) of recommended visiting spots among the plurality of recommended visiting spots as presentation targets to the user U.

Furthermore, the second external device 70 may also acquire the word-of-mouth evaluation, business days, business hours, or others as additional information to be presented together with the recommended visiting spot to be presented.

In addition, the second external device 70 searches for a route via the recommended visiting spot. For example, the second external device 70 may search for a route via the recommended visiting spot in accordance with preset content of the user U. For example, the second external device 70 may search for a route from the point of departure or the current location of the user U to the recommended visiting spot or may search for a route from the point of departure or the current location of the user U to a destination of the user U, which is a route via the recommended visiting spot.

According to the above example, the second external device 70 can generate the recommendation information RC including unique information of the recommended visiting spot to be presented, additional information, information of the route search result, and the like.

Then, the second external device 70 transmits the recommendation information RC to the terminal device 10 (step S56). FIG. 5 illustrates an example in which the second external device 70 transmits the recommendation information RC1 of "Pasta specialty restaurant NA in Takasaki City is recommended. To get there, ..." to the terminal device 10.

When the recommendation information RC is received by the reception unit 15f, the presentation control unit 15g of the terminal device 10 presents the received recommendation information RC to the user U (step S57). For example, the presentation control unit 15g may synthesize a voice reading out the recommendation information RC and cause the speaker to output the synthesized voice. Meanwhile, the presentation control unit 15g may display an image of the recommendation information RC on the display screen. Furthermore, the presentation control unit 15g may output both the voice of the recommendation information RC and the image of the recommendation information RC.

### [5. Modifications]

Modifications of the above embodiment will be described. For example, the terminal device 10 may be implemented in various different modes other than the above embodiment. Therefore, other embodiments of the terminal device 10 will be described below.

### [5-1. Cooking Recipe]

In the above embodiment, an example has been described in which, in the case where the visiting spot is specified from among a plurality of categories, the generation unit 15c generates attribute specifying information for specifying, as the keyword attribute, the name of the visiting region and the type of the visiting spot and includes, in the generated attribute specifying information, information requesting to specify a keyword indicating the name of the visiting region and a keyword indicating the type of the visiting spot. In addition, an example has been described in which the second transmission unit 15e transmits the keyword indicating the name of the visiting region and the keyword indicating the type of the visiting spot to the second external device 70 as the keywords specified by the first external device 40 in accordance with the attribute specifying information, thereby causing the second external device 70 to execute the search using these keywords as the search conditions.

However, in the case where the cooking recipe is specified from among the plurality of categories, the generation unit 15c may generate attribute specifying information for specifying the name of a dish as the keyword attribute and include information for requesting to specify a keyword indicating the name of the dish in the generated attribute specifying information. In addition, the second transmission unit 15e may transmit the keyword indicating the name of the dish to the second external device 70 as the keyword specified by the first external device 40 in accordance with the attribute specifying information, thereby causing the second external device 70 to execute the search using the keyword as the search conditions. The second external device 70 searches for, for example, ingredients, the amount thereof, and the cooking procedure on the basis of the keyword indicating the name of the dish and transmits the search result to the terminal device 10 as the recommendation information.

### [5-2. Music Content]

Alternatively, in the case where the music content is specified from among the plurality of categories, the generation unit 15c may generate attribute specifying information for specifying a genre of music or an artist name as the keyword attribute and include information for requesting to specify a keyword indicating the genre of music or the artist name in the generated attribute specifying information. In addition, the second transmission unit 15e may transmit the keyword indicating the genre of music or the artist name to the second external device 70 as the keyword specified by the first external device 40 in accordance with the attribute specifying information, thereby causing the second external device 70 to execute the search using the keyword indicating the genre of music or the artist name as the search condition. The second external device 70 searches for music content corresponding to, for example, the genre of music or the artist name on the basis of the keyword indicating the genre of music or the artist name and transmits the search result as the recommendation information to the terminal device 10.

### [6. Hardware Configuration]

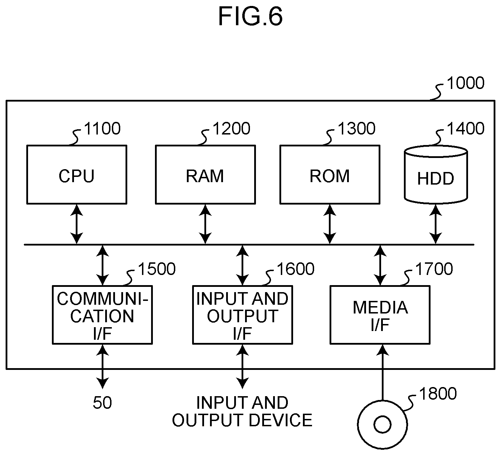

The above-described terminal device 10 may be implemented by, for example, a computer 1000 having a configuration as illustrated in FIG. 6. FIG. 6 is a hardware configuration diagram illustrating an example of a computer that implements the functions of the terminal device 10 according to the embodiment. The computer 1000 includes a CPU 1100, a RAM 1200, a ROM1300, an HDD 1400, a communication interface (I/F) 1500, an input and output interface (I/F) 1600, and a media interface (I/F) 1700.

The CPU 1100 operates on the basis of a program stored in the ROM1300 or the HDD 1400 and controls each unit. The ROM1300 stores a boot program executed by the CPU 1100 when the computer 1000 is activated, a program dependent on hardware of the computer 1000, and others.

The HDD 1400 stores a program executed by the CPU 1100, data used by the program, and others. The communication interface 1500 receives data from another device via a predetermined communication network, sends the data to the CPU 1100, and transmits data generated by the CPU 1100 to another device via a predetermined communication network.

The CPU 1100 controls an output device such as a display and an input device such as a keyboard via the input and output interface 1600. The CPU 1100 acquires data from the input device via the input and output interface 1600. In addition, the CPU 1100 outputs generated data to the output device via the input and output interface 1600.

The media interface 1700 reads a program or data stored in a recording medium 1800 and provides the program or data to the CPU 1100 via the RAM 1200. The CPU 1100 loads the program from the recording medium 1800 onto the RAM 1200 via the media interface 1700 and executes the loaded program. The recording medium 1800 is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the terminal device 10 according to the embodiment, the CPU 1100 of the computer 1000 implements the function of the control unit 15 by executing a program loaded on the RAM 1200. The CPU 1100 of the computer 1000 reads and executes these programs from the recording medium 1800; however, as another example, these programs may be acquired from another device via a predetermined communication network.

### [7. Others]

Among the pieces of processing described in the above embodiments, all or some pieces of the processing described as those performed automatically can be performed manually, alternatively, all or some pieces of the processing described as those performed manually can be performed automatically by a known method. In addition, processing procedures, specific names, and information including various types of data and parameters mentioned herein or illustrated in the drawings can be modified as preferred unless otherwise specified. For example, the various types of information illustrated in the drawings are not limited to those illustrated.

In addition, each component of each device illustrated in the drawings is functionally conceptual and is not necessarily physically configured as illustrated in the drawings. That is, a specific form of distribution and integration of the devices is not limited to that illustrated in the drawings, and all or a part thereof can be functionally or physically distributed or integrated in a preferred unit size depending on various loads, usage conditions, and the like.

In addition, the above-described embodiments can be combined as appropriate within a range in which the pieces of processing content do not contradict each other.

Although some of the embodiments of the present application have been described in detail with reference to the drawings, these are merely examples, and the present invention can be implemented in other forms subjected to various modifications and/or improvements on the basis of the knowledge of those skilled in the art, including the aspects described herein.

### Reference Signs List

1 SYSTEM
10 TERMINAL DEVICE
12 INPUT UNIT
13 OUTPUT UNIT
14 STORAGE UNIT
15 CONTROL UNIT
15a ACCEPTANCE UNIT
15b CATEGORY SPECIFYING UNIT
15c GENERATION UNIT
15d FIRST TRANSMISSION UNIT
15e SECOND TRANSMISSION UNIT
15f RECEPTION UNIT
15g PRESENTATION CONTROL UNIT

## Claims

1. An information processing device that presents information regarding a recommendation target to a user on a basis of a dialog with the user, the information processing device comprising:
a first transmission unit that transmits, to a first external device, question request information for requesting the first external device to present a question for narrowing down the recommendation target, an answer from the user to the question output from the first external device in accordance with the question request information, and attribute specifying information for specifying an attribute of a keyword to be specified by the first external device on the basis of the answer;
a second transmission unit that transmits the keyword specified by the first external device in accordance with the attribute specifying information to a second external device, the second external device being different from the first external device; and
a presentation control unit that presents, to the user, as information regarding the recommendation target, information based on a search result obtained by the second external device performing a search by using the keyword as a search condition.

2. The information processing device according to claim 1, further comprising:
a category specifying unit that accepts specification of a category from among a plurality of categories, the category to which the recommendation target the user desires to be proposed belongs; and
a generation unit that generates the question request information for requesting the first external device to output a question for narrowing down the recommendation target belonging to the category specified by the user and the attribute specifying information for specifying an attribute of the keyword to be specified on a basis of an answer from the user to the question.

3. The information processing device according to claim 2, further comprising:
a database that stores candidates for the attribute in association with each of the plurality of categories,
wherein the generation unit compares the category specified by the user with the database, extracts an attribute corresponding to the category specified by the user from among candidates for the attribute, and generates the attribute specifying information specifying the extracted attribute, and
the first transmission unit transmits the attribute specifying information generated by the generation unit to the first external device.

4. The information processing device according to claim 3,
wherein the generation unit generates the attribute specifying information including information specifying that each of the keywords specified by the first external device in accordance with the attribute specifying information be output in a manner in which each of the keywords is distinguished from one another.

5. The information processing device according to claim 1,
wherein the second transmission unit further transmits a search condition specified by the user to the second external device in a case where a search condition regarding the recommendation target is specified by the user.

6. The information processing device according to claim 2,
wherein the plurality of categories include at least one of a visiting spot, a cooking recipe, or music.

7. The information processing device according to claim 6,
wherein, in a case where the visiting spot is specified from among the plurality of categories,
the generation unit generates, as the attribute, the attribute specifying information specifying a visiting region and a type of a visiting spot and includes, in the generated attribute specifying information, information requesting to specify, as the keywords, a keyword indicating the visiting region and a keyword indicating the type of the visiting spot, and
the second transmission unit causes the second external device to execute a search using the keyword indicating the visiting region and the keyword indicating the type of the visiting spot as search conditions by transmitting, to the second external device, the keyword indicating the visiting region and the keyword indicating the type of the visiting spot as the keywords specified by the first external device in accordance with the attribute specifying information.

8. The information processing device according to claim 6,
wherein, in a case where the cooking recipe is specified from among the plurality of categories,
the generation unit generates the attribute specifying information for specifying a name of a dish as the attribute and includes, in the generated attribute specifying information, information requesting to specify a keyword indicating the name of the dish as the keyword, and
the second transmission unit causes the second external device to execute a search using the keyword indicating the name of the dish as a search condition by transmitting the keyword indicating the name of the dish to the second external device as the keyword specified by the first external device in accordance with the attribute specifying information.

9. The information processing device according to claim 6,
wherein, in a case where the music is specified from among the plurality of categories,
the generation unit generates the attribute specifying information for specifying a genre of music or an artist name as the attribute and includes, in the generated attribute specifying information, information requesting to specify a keyword indicating the genre of music or the artist name as the keyword, and
the second transmission unit causes the second external device to execute a search using the keyword indicating the genre of music or the artist name as a search condition by transmitting the keyword indicating the genre of music or the artist name to the second external device as the keyword specified by the first external device in accordance with the attribute specifying information.

10. An information processing method executed by an information processing device that presents information regarding a recommendation target to a user on a basis of a dialog with the user, the information processing method comprising:
a first transmission step of transmitting, to a first external device, question request information for requesting the first external device to present a question for narrowing down the recommendation target, an answer from the user to the question output from the first external device in accordance with the question request information, and attribute specifying information for specifying an attribute of a keyword to be specified by the first external device on the basis of the answer;
a second transmission step of transmitting the keyword specified by the first external device in accordance with the attribute specifying information to a second external device, the second external device being different from the first external device; and
a presentation control step of presenting, to the user, as information regarding the recommendation target, information based on a search result obtained by the second external device performing a search by using the keyword as a search condition.

11. An information processing program executed by an information processing device that presents information regarding a recommendation target to a user on a basis of a dialog with the user, the information processing program comprising:
a first transmission procedure of transmitting, to a first external device, question request information for requesting the first external device to present a question for narrowing down the recommendation target, an answer from the user to the question output from the first external device in accordance with the question request information, and attribute specifying information for specifying an attribute of a keyword to be specified by the first external device on the basis of the answer;
a second transmission procedure of transmitting the keyword specified by the first external device in accordance with the attribute specifying information to a second external device, the second external device being different from the first external device; and
a presentation control procedure of presenting, to the user, as information regarding the recommendation target, information based on a search result obtained by the second external device performing a search by using the keyword as a search condition.
